# NEUE EUROPÄISCHE PATENTSCHRIFT

(11) **EP 1 304 332 B2**
(45) Veröffentlichungstag und Bekanntmachung des Hinweises auf die Entscheidung über den Einspruch: **13.10.2010**
(45) Hinweis auf die Patenterteilung: 02.01.2004
(21) Anmeldenummer: 02019098.9
(22) Anmeldetag: 29.08.2002
(51) Int. Cl.: C07F 7/08, C07F 7/10

(54) **Mit Aminogruppen oberflächenmodifizierte Feststoffe**
With amino groups surface-modified solids
Produits solids dont la surface est modifié par des groups amino

(30) Priorität: 18.10.2001 DE 10151478
(43) Veröffentlichungstag der Anmeldung: 23.04.2003
(73) Patentinhaber: Wacker Chemie AG, 81737 München (DE)
(72) Erfinder: Barthel, Herbert, Dr., 84547 Emmerting (DE); Heinemann, Mario, Dr., 84489 Burghausen (DE); Pachaly, Bernd, Dr., 84561 Mehring (DE); Bauer, Andreas, Dr., 81371 München (DE); Schäfer, Oliver, Dr., 81377 München (DE)
(74) Vertreter: Fritz, Helmut

(56) Entgegenhaltungen:
- EP- - 1 266 864
- EP-A- 1 195 379
- EP-A- 1 201 669
- EP-A1- 0 722 992
- EP-A1- 1 078 883
- EP-A2- 1 138 724
- EP-A2- 1 236 773
- EP-B1- 0 725 037
- DE-A- 3 546 376
- DE-A- 3 902 483
- DE-A- 4 234 846
- DE-A- 19 756 831
- US- - 3 146 250
- US- - 5 895 713
- US- - 5 989 768
- US-A- 3 953 487

## Beschreibung

Die Erfindung betrifft ein Verfahren zur Herstellung eines oberflächenmodifizierten Feststoffs.

Die Oberflächenmodifizierung von Feststoffe, seien es pulverförmige Feststoffe oder massive (Bulk-) Feststoffe, steht häufig vor dem Problem, daß die Oberflächenmodifizierung nicht permanent ist, d.h. das Agenz der Oberflächenmodifizierung ist nicht ausreichend auf der Oberfläche verankert, und wird daher durch Lösemittel oder das umgebende Medium oder die umgebende Matrix abgelöst und ausgewaschen. Dieses Problem kann überwunden werden, indem eine feste chemische Anbindung unter Ausbildung chemischer Bindungen erzielt wird. Letzteres Vorgehen weist dann jedoch den Nachteil auf, daß bei den bekannten Verfahren Nebenreaktionsprodukte entstehen, die abgespalten werden. Letztere stören die weitere Anwendung. Die Abreinigung ist immer mit erhöhtem Aufwand verbunden, da sie einen zusätzlichen Arbeitsschritt darstellt, der Kosten verursacht. Zusätzlich ist das Nebenreaktionsprodukt als Abfall zu entsorgen, ein kostenintensiver und die Umwelt belastender Vorgang. Hinzukommt, daß die Abreinigung zumeist nur unvollständig erzielt wird, also unerwünschtes Nebenreaktionsprodukt auf der Oberfläche verbleibt. Auch stellt die Reinigung, die aus technischen Gegebenheiten heraus bei erhöhter Temperatur erfolgen muß, einen zusätzlichen, das Zielprodukt belastenden und in seiner Qualität verschlechternden Vorgang dar.

Restgehalte an Nebenreaktionsprodukten sind insbesondere dann nachteilig, wenn der pulverförmige Feststoff als rheologisches Additiv in flüssigen Medien wie Polymeren und Harzen oder Harzlösungen eingesetzt wird, da solche Nebenreaktionsprodukte die Rheologie in unkontrollierbarer Art und Weise verändern können.

Restgehalte an Nebenreaktionsprodukte sind darüberhinaus insbesondere dann nachteilig, wenn der pulverförmige Feststoff als Rieselhilfe und triboelektrisches Ladungssteuerungsmittel in pulverförmigen Systemen, wie Tonern, Entwicklern oder pulverförmigen Lack oder Anstrichsystemen eingesetzt wird, da solche Nebenreaktionsprodukte das freie Fliessen und triboelektrische Effekte in unkontrollierbarer Art und Weise verändern können.

Restgehalte an Nebenreaktionsprodukte sind darüberhinaus insbesondere dann nachteilig, wenn der Feststoff mit dem Ziel der Verbesserung der Haftung oder Vernetzung mit dem umgebenden Medium oberflächenbehandelt wird, da solche Nebenreaktionsprodukte die Haftung oder Vernetzung in unkontrollierbarer Art und Weise verändern können.

Bekannt ist aus US-A-5458916 der Zusatz von Alkoholen als Katalysator zur Verbesserung der Reaktionsausbeute von Kieselsäure mit Chlorsilanen. Dies hat jedoch den Nachteil, daß Spuren von Alkohol zusätzlich zur HCl und deren Nebenreaktionsprodukte auf der Metalloxid verbleiben.

Bekannt ist aus US-A-3868345 und US-A-3953487 die Metalloxide mit Silazanen zu silylieren. Bei den dort beschriebenen Verfahren verbleiben jedoch Spuren von Ammoniak auf der Metalloxid.

Ein weiterer Nachteil von diesen Metalloxiden tritt auf beim Einsatz als aktiver Füllstoff oder rheologisches Additiv in Flüssigkeits-, Polymer- und Harzsystemen mittlerer und hoher Polarität. Dort entstehen Probleme bei der Mischbarkeit und der Viskositätsstabilität.
Ein weiterer Nachteil zeigen diese Metalloxide, wenn sie als Additiv, z.B. als Antiblockmittel, als Rieselhilfsmittel oder zur Steuerung oder Regulierung von triboelektrischen Eigenschaften mit Feststoffen, insbesondere feinteiligen Feststoffen, wie vernetzte Polymer- und Harzsysteme oder anorganische feinteilige Feststoffe; eingesetzt werden. Es resultieren Probleme in der Stabilität des Systems hinsichtlich Ladung. Dies führt zu Störungen wenn sie als Rieselhilfsmittel und / oder als Ladungsregulativ in pulverförmigen Produkten, wie Pulverharzsystemen, wie für Pulverlackbeschichtungen eingesetzt, oder in Tonern und Entwicklern eingesetzt werden.

US A 5,989,768 beschreibt die Behandlung von Metalloxiden mit cyclischen Silazanen.

Der Erfindung lag die Aufgabe zugrunde, einen oberflächenmodifizierten Feststoff bereitzustellen, der die Nachteile des Standes der Technik nicht aufweist.

Gegenstand der Erfindung ist ein Verfahren zur Herstellung eines mit Gruppen der allgemeinen Formel I

SiR¹ ₂-R-NH₂ (I),

oberflächenmodifizierten Feststoffs (FM), bei dem ein Feststoff (F), der an der Oberfläche OH-Gruppen aufweist, mit cyclischem Silazan der allgemeinen Formel II 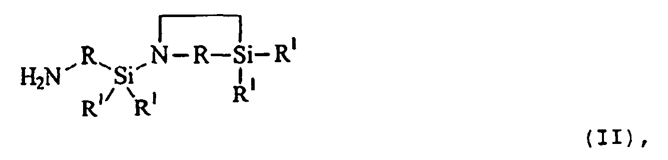 umgesetzt wird, wobei
- **R**: einen divalenten N-C und C-Si gebundenen, gegebenenfalls Cyano- oder halogensubstituierten C₃-C₁₅-Kohlenwasserstoff-Rest, in dem eine oder mehrere, einander nicht benachbarte Methylen-einheiten durch Gruppen -O-, -CO-, -COO-, -OCO-, oder -OCOO-, -S-, oder **-NR^{x}-** ersetzt sein können und in dem eine oder mehrere, einander nicht benachbarte Methineinheiten durch Gruppen -N=,-N=N-,oder -P= ersetzt sein können, wobei zwischen Silicium-Atom und Stickstoffatom des Ringes mindestens 3 und maximal 6 Atome angeordnet sind,
- **R^{x}**: Wasserstoff oder einen gegebenenfalls mit -CN oder Halogen substituierten C₁-C₁₀-Kohlenwasserstoffrest und
- **R¹**: ein Wasserstoffatom oder einen monovalenten gegebenenfalls mit -CN, -NCO, -NR**^{x}**₂, -COOH, -COOR**^{x}**, -Halogen, -Acryl, -Epoxy, -SH, -OH oder -CONR**^{x}**₂ substituierten Si-C gebundenen C₁-C₂₀-Kohlenwasserstoffrest oder C₁-C₁₅-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -NR**^{x}**- ersetzt sein können und in denen eine oder mehrere, einander nicht benachbarte Methineinheiten durch Gruppen -N=,-N=N-,oder -P= ersetzt sein können,
bedeuten.

Da die Umsetzung ohne die Bildung von Nebenreaktionsprodukten oder Spaltprodukten aus der Oberflächenmodifizierung abläuft, enthält der Feststoff (FM) keine derartigen Produkte.

Oberflächenmodifizierter Feststoff (FM), der erhältlich ist nach dem vorliegenden Verfahren, ist ebenfalls Gegenstand der Erfindung.

Der eingesetzte Feststoff (F), der an der Oberfläche OH-Gruppen aufweist, kann beliebig sein, beispielsweise ein organischer Feststoff, wie Cellulose, ein Metall mit oxidierter Oberfläche, wie Silicium; Aluminium, Eisen, ein Mineralglas, wie Quarzglas oder Fensterglas oder ein Metalloxid sein.

Als Basis-(Ausgangs-)-Produkt der Oberflächenmodifizierung wird bevorzugt ein Feststoff (F) mit einer mittleren Partikelgröße <1000 p, insbesondere mit einer mittleren Primärteilchen-Partikelgröße von 5 bis 100 nm eingesetzt. Dabei können diese Primärteilchen nicht isoliert existieren, sondern Bestandteile größerer Aggregate und Agglomerate sein.

Bevorzugte Feststoffe (F) sind Metalloxide. Vorzugsweise weist das Metalloxid eine spezifische Oberfläche von 0,1 bis 1000 m²/g (gemessen nach der BET Methode nach DIN 66131 und 66132) auf, besonders bevorzugt von 10 bis 500 m²/g.

Das Metalloxid kann Aggregate (Definition nach DIN 53206) im Bereich von Durchmessern 50 bis 1000 nm aufweisen, wobei das Metalloxid aus Aggregaten aufgebaute Agglomerate (Definition nach DIN 53206) aufweist, die in Abhängigkeit von der äußeren Scherbelastung (z.B. bedingt durch die Meßbedingungen) Größen von 1 bis 1000 µm aufweisen kann.

Das Metalloxid ist aus Gründen der technischen Handhabbarkeit vorzugsweise ein Oxid mit kovalentem Bindungs-Anteil in der Metall-Sauerstoff-Bindung, vorzugsweise ein Oxid im Aggregatszustand Feststoff der Haupt- und Nebengruppenelemente, wie der 3. Hauptgruppe, wie Bor-, Aluminium-, Gallium- oder Indiumoxid, oder der 4. Hauptgruppe wie Siliciumdioxid, Germaniumdioxid, oder Zinnoxid oder -dioxid, Bleioxid oder -dioxid, oder ein Oxid der 4. Nebengruppe, wie Titandioxid, Zirkonoxid, oder Hafniumoxid. Andere Beispiele sind stabile Nickel-, Kobalt-, Eisen-, Mangan-, Chrom- oder Vanadiumoxide.

Besonders bevorzugt sind Aluminium(III)-, Titan(IV)- und Silicium(IV)oxide, wie naßchemisch hergestellte, beispielsweise gefällte Kieselsäuren oder Kieselgele, oder in Prozessen bei erhöhter Temperatur hergestellte Aluminiumoxide, Titandioxide oder Siliciumdioxide, wie zum Beispiel pyrogen hergestellte Aluminiumoxide, Titandioxide oder Siliciumdioxide oder Kieselsäure.

Andere Feststoffe sind Silikate, Aluminate oder Titanate, oder Aluminiumschichtsilikate, wie Bentonite, wie Montmorillonite, oder Smektite oder Hektorite.
Ein andere Form einsetzbaren Feststoffs sind Ruße, wie Flammruße, Ofenruße, sogenannte Furnace-Ruße, oder Ruße, die als Farbstoff oder als Verstärkerfüllstoff oder als rheologisches Additive eingesetzt werden können, sogenannte "Carbon Black" Ruße.

Besonders bevorzugt ist pyrogene Kieselsäure, die in einer Flammenreaktion aus Organosiliciumverbindungen hergestellt wird, z.B. aus Siliciumtetrachlorid oder Methyldichlorsilan, oder Hydrogentrichlorsilan oder Hydrogenmethyldichlorsilan, oder anderen Methylchlorsilanen oder Alkylchlorsilanen, auch in Gemisch mit Kohlenwasserstoffen, oder beliebigen verflüchtigbaren oder versprühbaren Gemischen aus Organosiliciumverbindungen, wie genannt, und Kohlenwasserstoffen, z.B. in einer Wasserstoff-Sauerstoff-Flamme, oder auch einer Kohlenmonoxid-Sauerstoffflamme, hergestellt wird. Die Herstellung der Kieselsäure kann dabei wahlweise mit und ohne zusätzlichem Zusatz von Wasser erfolgen, zum Beispiel im Schritt der Reinigung; bevorzugt ist kein Zusatz von Wasser.

Es können beliebige Gemische der genannte Feststoffe zur Oberflächenmodifizierung eingesetzt werden.

Vorzugsweise weist die pyrogene Kieselsäure eine fraktale Dimension der Oberfläche von vorzugsweise kleiner oder gleich 2,3 auf, besonders bevorzugt von kleiner oder gleich 2,1, im besonderen bevorzugt von 1,95 bis 2,05, wobei die fraktale Dimension der Oberfläche Dₛ hierbei definiert ist als: Partikel-Oberfläche A ist proportional zum Partikel-Radius R hoch Dₛ

Vorzugsweise weist die Kieselsäure eine fraktalen Dimension der Masse Dₘ von vorzugsweise kleiner oder gleich als 2,8, bevorzugt kleiner oder gleich 2,7, besonders bevorzugt von 2,4 bis 2,6 auf. Die fraktale Dimension der Masse Dₘ ist hierbei definiert als:
Partikel-Masse M ist proportional zum Partikel-Radius R hoch Dₘ.

Vorzugsweise weist die Kieselsäure eine Dichte an Oberflächen-Silanolgruppen SiOH von kleiner als 2,5 SiOH / nm², vorzugsweise kleiner 2,1 SiOH / nm², bevorzugt von kleiner als 2 SiOH / nm², besonders bevorzugt von 1,7 bis 1,9 SiOH / nm² auf.

Es können auf naßchemisch hergestelltem Weg oder bei hoher Temperatur (>1000 °C) hergestellte Kieselsäuren eingesetzt werden. Besonders bevorzugt sind pyrogen hergestellte Kieselsäuren. Es können auch hydrophile Metalloxide eingesetzt werden, die frisch hergestellt direkt aus dem Brenner kommen, zwischengelagert oder bereits handelsüblich verpackt sind. Es können auch hydrophobierte Metalloxide oder Kieselsäuren, z.B. handelsübliche Kieselsäuren, eingesetzt werden.

Es können unverdichtete, mit Schüttdichten < 60 g/l, aber auch verdichtete, mit Schüttdichten > 60 g/l, Kieselsäuren eingesetzt werden.

Es können Gemische aus verschiedenen Metalloxiden oder Kieselsäuren eingesetzt werden, so z.B. Mischungen aus Metalloxiden oder Kieselsäuren unterschiedlicher BET-Oberfläche, oder Mischungen aus Metalloxiden mit unterschiedlichem Hydrophobier- oder Silyliergrad.

Das Metalloxid (FM) kann in kontinuierlichen, oder diskontinuierlichen Verfahren hergestellt werden, das Verfahren zur Silylierung kann aus einem oder mehreren Schritten aufgebaut sein. Bevorzugt wird das silylierte Metalloxid mittels eines Verfahren hergestellt, bei dem der Herstellungsprozeß in getrennten Schritten erfolgt: (A) zunächst Herstellung des hydrophilen Metalloxids, sodann (B) die Silylierung des Metalloxids mit (1) Beladung des hydrophilen Metalloxids mit cyclischem Silazan, (2) Reaktion des hydrophilen Metalloxids mit dem cyclischen Silazan und (3) Reinigung des hydrophilen Metalloxids von cyclischem Silazan.

Die Oberflächenbehandlung wird bevorzugt in einer Atmosphäre durchgeführt, die nicht zur Oxidation des silylierten Metalloxids (FM) führt, d.h. bevorzugt weniger als 10 Vol% Sauerstoff, besonders bevorzugt weniger als 2,5 Vol%, beste Ergebnisse werden erzielt bei weniger als 1 Vol% Sauerstoff.

Belegung, Reaktion und Reinigung können als diskontinuierlicher oder kontinuierlicher Prozess durchgeführt werden.

Aus technischen Gründen bevorzugt ist eine kontinuierliche Reaktionsführung.

Die Belegung erfolgt bevorzugt bei Temperaturen von -30 - 250 °C, bevorzugt 20-150 °C, im besonderen bevorzugt 20-80 °C; bevorzugt wird der Belegungsschritt auf 30-50 °C gekühlt.
Die Verweilzeit beträgt 1 Min - 24 h, bevorzugt 15 Min bis 240 Min, aus Gründen der Raumzeitausbeute besonders bevorzugt 15 Min bis 90 Min.
Der Druck in der Belegung reicht von schwachem Unterdruck bis 0,2 bar bis zum Überdruck von 100 bar, wobei aus technischen Gründen Normaldruck, das heißt druckfreies Arbeiten gegenüber Außen-/Atmospheren-Druck bevorzugt ist.

Cyclisches Silazan wird bevorzugt als Flüssigkeit zugefügt und insbesondere dem pulverförmigen Metalloxid zugemischt.
Dies geschieht vorzugsweise durch Düsentechniken, oder vergleichbare Techniken, wie effektive Verdüsungstechniken, wie Verdüsen in 1-Stoffdüsen unter Druck ( vorzugsweise 5 bis 20 bar), Versprühen in 2-Stoffdüsen unter Druck ( vorzugsweise Gas und Flüssigkeit 2-20 bar), Feinstverteilen mit Atomizern oder Gas-Feststoff-Austauschaggregaten mit beweglichen, rotierenden oder statischen Einbauten, die eine homogene Verteilung des cyclischen Silazans mit der pulverförmigen Metalloxid erlauben. Bevorzugt wird das cyclische Silazan als feinstverteiltes Aerosol zugefügt, dadurch gekennzeichnet, daß das Aerosol eine Sinkgeschwindigkeit von 0,1 - 20 cm/s aufweist.
Bevorzugt erfolgt die Beladung des Metalloxids und die Reaktion mit dem cyclischen Silazan unter mechanischer oder gasgetragener Fluidisierung. Besonders bevorzugt ist die mechanische Fluidisierung.
Eine Gas-getragene Fluidisierung kann durch alle inerten Gase erfolgen, die nicht mit dem cyclischen Silazan, dem Metalloxid, und dem silylierten Metalloxid reagieren, also nicht zu Nebenreaktionen, Abbaureaktionen, Oxidationsvorgängen und Flammen- und Explosionserscheinungen führen, wie vorzugsweise N₂, Ar, andere Edelgase, CO₂, etc. Die Zuführung der Gase zur Fluidisierung erfolgt bevorzugt im Bereich von Leerrohrgasgeschwindigkeiten von 0,05 bis 5 cm/s, besonders bevorzugt von 0,5-2,5 cm/s.
Besonders bevorzugt ist die mechanische Fluidisierung, die ohne zusätzlichen über die Inertisierung hinausgehenden Gaseinsatz, durch Flügelrührer, Ankerrührer, und sonstige geeignete Rührorgane erfolgt.
In einer besonders bevorzugten Ausführung werden nicht abreagiertes cyclisches Silazan und Abgase aus dem Reinigungsschritt wieder in den Schritt der Belegung und Beladung des Metalloxids zurückgeführt; dies kann teilweise oder vollständig geschehen, bevorzugt zu 10 - 90 % des gesamten Volumenstromes der aus der Abreinigung austretenden Gasvolumina.
Dies geschieht in geeignet temperierten Vorrichtungen.
Diese Rückführung erfolgt bevorzugt in nicht-kondensierter Phase, also als Gas oder als Dampf. Diese Rückführung kann als Stofftransport entlang eines Druckausgleichs erfolgen oder als gesteuerter Stofftransport mit den technisch üblichen Systemen des Gastransports, wie Ventilatoren, Pumpen, Druckluftmembranpumpen. Da die Rückführung der nichtkondensierten Phase bevorzugt ist, empfiehlt sich gegebenenfalls die Beheizung der rückführenden Leitungen.
Die Rückführung des nicht abreagierten cyclischen Silazans und der Abgase kann dabei zwischen 5 und 100 Gew.%, bezogen auf deren Gesamtmasse, bevorzugt zwischen 30 und 80 Gew.% liegen. Die Rückführung kann dabei, bezogen auf 100 Teile frisch eingesetztes cyclisches Silazan zwischen 1 und 200 Teile, bevorzugt 10 bis 30 Teile betragen.

Die Rückführung der Abreinigungprodukte der Silylierreaktion in die Belegung erfolgt bevorzugt kontinuierlich.

Die Reaktion erfolgt bevorzugt bei Temperaturen 40-200 °C, bevorzugt 40-160 °C und besonders bevorzugt bei 80-120 °C.
Die Reaktionszeit beträgt 5 Min bis 48 h, vorzugsweise 10 Min bis 4 h.
Wahlweise können protische Lösungsmittel hinzugefügt werden, wie flüssige oder verdampfbare Alkohole oder Wasser; typische Alkohole sind iso-Propanol, Ethanol und Methanol. Es können auch Gemische der oben genannten protischen Lösungsmittel zugefügt werden. Vorzugsweise werden 1 bis 50 Gew% an protischen Lösungsmittel bezogen auf die Metalloxid zugefügt, besonders bevorzugt 5 bis 25%. Besonders bevorzugt ist Wasser. Wahlweise können saure Katalysatoren, von saurem Charakter im Sinne einer Lewis Säure oder einer Brönsted Säure, wie Chlorwasserstoff oder basische Katalysatoren, von basischem Charakters, im Sinne einer Lewis Base oder einer Brönsted Base, wie Ammoniak, zugesetzt werden. Bevorzugt werden diese in Spuren zugesetzt, d.h kleiner als 1000 ppm. Besonders bevorzugt werden keine Katalysatoren zugesetzt.

Die Abreinigung erfolgt bei einer Reinigungstemperatur von 20 bis 200 °C, bevorzugt 50°C bis 150°C, besonders bevorzugt von 50 bis 120 °C.
Der Reinigungsschritt ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, daß bevorzugt ein Mischen und ein Fluidisieren, jedoch nicht völlige Verwirbelung, eintritt.
Der Reinigungsschritt kann weiterhin durch erhöhten Gaseintrag gekennzeichnet sein, entsprechend einer Leerrohrgasgeschwindigkeit von 0,001 bis 10 cm/s, bevorzugt 0,01 bis 1 cm/s. Dies kann durch alle inerten Gase erfolgen, die nicht mit dem Cyclischen Silazan, dem Metalloxid, und dem silylierten Metalloxid reagieren, also nicht zu Nebenreaktionen, Abbaureaktionen, Oxidationsvorgängen und Flammen- und Explosionserscheinungen führen, wie vorzugsweise N₂, Ar, andere Edelgase, CO₂, etc.

Zusätzlich können während der Silylierung oder im Anschluss an die Reinigung Verfahren zur mechanischen Verdichtung der Metalloxid eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

Besonders bevorzugt ist die mechanische Verdichtung während der Silylierung, im Schritt (II) der Reaktion durch Presswalzen, oben genannte Mahlaggregate wie Kugelmühlen oder Verdichtung durch Schnecken, Schraubenmischer, Schraubenverdichter, Brikettierer.

In einer weiteren besonders bevorzugten Verfahrensweise werden im Anschluss an die Reinigung Verfahren zur mechanischen Verdichtung des Metalloxids (FM) eingesetzt, wie Verdichten durch Absaugen des Luft- oder Gasinhaltes durch geeignete Vakuummethoden oder Presswalzen oder Kombination von beiden Verfahren.

Zusätzlich können in einer besonders bevorzugten Verfahrensweise im Anschluss an die Reinigung Verfahren zur Desagglomerierung der Metalloxid (FM) eingesetzt werden, wie Stiftmühlen oder Vorrichtungen zur Mahlsichtung, wie Stiftmühlen, Hammermühlen, Gegenstrommühlen, Prallmühlen oder Vorrichtungen zur Mahlsichtung.

Das cyclische Silazan wird vorzugsweise in einer Menge größer 1 Gew.% (bezogen auf das Metalloxid), bevorzugt größer 3 Gew.% (bezogen auf das Metalloxid), besonders bevorzugt größer 10 Gew.% (bezogen auf das Metalloxid), pro einer eingesetzten Metalloxid (F) -Oberfläche von 100 m²/g BET-Oberfläche eingesetzt (gemessen nach der BET Methode nach DIN 66131 und 66132).

Im cyclischem Silazan der allgemeinen Formel II kann **R** aliphatisch gesättigt oder ungesättigt, aromatisch, geradkettig oder verzweigt sein. **R** ist vorzugsweise ein unverzweigter C₃-C₆-Alkylenrest, der substituiert sein kann mit Halogenatomen, insbesondere Fluor und Chlor. Vorzugsweise sind zwischen Silicium-Atom und Stickstoffatom des Ringes 3 Atome angeordnet. **R** ist insbesondere ein Propylenrest.

Die C₁-C₂₀-Kohlenwasserstoffreste und C₁-C₂₀-Kohlenwasserstoffoxyreste **R¹** können aliphatisch gesättigt oder ungesättigt, aromatisch, geradkettig oder verzweigt sein. **R¹** weist vorzugsweise 1 bis 12 Atome, insbesondere 1 bis 6 Atome, vorzugsweise nur Kohlenstoffatome, oder ein Alkoxysauerstoffatom und sonst nur Kohlenstoffatome auf. Vorzugsweise ist **R¹** ein geradkettiger oder verzweigter C₁-C₆-Alkylrest. Besonders bevorzugt sind die Reste Methyl, Ethyl, Phenyl, Vinyl und Trifluorpropyl.

Ein Silazan der allgemeinen Formel II kann hergestellt werden durch ein Verfahren, bei dem Halogenalkyldialkylchlorsilan der allgemeinen Formel III 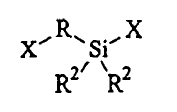 oder Bishalogenalkyltetraalkyldisilazan der allgemeinen Formel IV 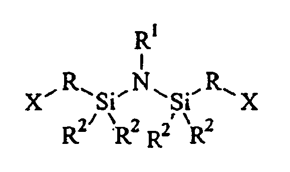 oder ein Gemisch aus Verbindungen der allgemeinen Formeln III und IV, bei denen
- **X**: F, Cl, Br, oder I bedeuten,
- **R²**: die Bedeutungen von R¹ hat und
- **R¹** und **R**: die vorstehenden Bedeutungen aufweisen,
mit Ammoniak, vorzugsweise unter Druck umgesetzt wird.

Der Feststoff (F) kann zusätzlich zu cyclischem Silazan der allgemeinen Formel II mit einem üblichem Mittel zur Oberflächenmodifizierung, insbesondere Silylierungsmittel umgesetzt werden.

Ebenfalls Gegenstand der Erfindung ist ein Verfahren zur Herstellung eines oberflächenmodifizierten Feststoffs (FM), bei dem ein Feststoff (F), der an der Oberfläche OH-Gruppen aufweist, mit aminofunktionellem Organosiloxan der allgemeinen Formel V umgesetzt wird,

(SiO_{4/2})ₖ(R¹SiO_{3/2})ₘ(R¹₂SiO_{2/2})ₚ(R¹₃SiO_{1/2})_{q}

[O_{1/2}SiR¹₂-R-NH₂]ₛ[O_{1/2}H]ₜ (V)

welches erhältlich ist durch Umsetzung von Organosiloxan der allgemeinen Formel VI

(SiO_{4/2})ₖ(R¹SiO_{3/2})ₘ(R¹₂SiO_{2/2})ₚ(R¹₃SiO_{1/2})_{q}[O_{1/2}H]ᵣ (VI)

mit cyclischem Silazan der vorstehenden allgemeinen Formel II, wobei
- **R** und **R¹**: die bei der allgemeinen Formel II bezeichneten Bedeutungen aufweisen und
- **s**: Werte von mindestens 1,
- **r**: Werte von mindestens 1,
- **s + t**: den Wert von r und
- **k + m + p + q**: Werte von mindestens 2 bedeuten.

Bevorzugte oberflächenmodifizierte Feststoffe (FM), Feststoffe (F) sowie cyclische Silazane der allgemeinen Formel II, sind vorstehend beschrieben.

Bevorzugt werden die Verbindungen der allgemeinen Formel V eingesetzt, bei denen **R** einen Propylenrest bedeutet und **R¹** Methyl, Ethyl, Phenyl, Vinyl oder Trifluorpropyl bedeutet.

Das aminofunktionelle Organosiloxan der allgemeinen Formel V kann linear, cyclisch oder verzweigt sein. Die Summe **von k, m, p, q, s** und **t** ist vorzugsweise eine Zahl von 2 bis 20000, insbesondere 8 bis 1000. Um eine Reaktion zwischen dem Organosiloxan der allgemeinen Formel VI und dem Silazan zu ermöglichen, muß **r** > 0 sein, d.h. das Organosiloxan der allgemeinen Formel VI muss Hydroxy-Gruppen enthalten.

Eine bevorzugte Variante für ein verzweigtes Organosiloxan der allgemeinen Formel V ist Organosilicon-Harz. Dieses kann aus mehreren Einheiten bestehen, wie in der allgemeinen Formel V angedeutet ist, wobei die Molprozente der enthaltenen Einheiten durch die Indizes **k, m, p, q, r, s** und **t** bezeichnet werden. Bevorzugt ist ein Wert von 0.1 bis 20 % an Einheiten **r**, bezogen auf die Summe von **k, m, p, q** und **r**. Gleichzeitig muß aber auch **k + m** > 0 sein. Beim Organosiloxanharz der allgemeinen Formel V muß **s** > 0 sein und **s + t** gleich **r** sein.

Bevorzugt sind hierbei Harze, bei denen 5 % < **k + m** < 90 %, bezogen auf die Summe von **k, m, p, q, r, s** und **t** ist und vorzugsweise **t** gleich 0 ist. In einem besonders bevorzugten Fall ist der Rest **R** ein Propylenrest und **R¹** ist ein Methylrest.

Will man hier Harze herstellen, welche nur einen definierten Amingehalt haben, so wählt man die stöchiometrischen Verhältnisse zwischen Harz und cyclischem Silazan so, daß der gewünschte Amingehalt erreicht wird. Restliche Si-OH Gruppen können gegebenenfalls im Produkt verbleiben.

Eine weitere bevorzugte Variante für ein aminofunktionelles Organosiloxan der allgemeinen Formel V ist ein lineares Organosiloxan der allgemeinen Formel VII,

[H]ᵤ[H₂N-R-SiR¹₂]ᵥO(SiR¹₂O)ₙSiR¹₂-R-NH₂ (VII)

das aus Organosiloxan der allgemeinen folgenden Formel VIII

HO(R¹₂SiO)ₙR¹₂SiOH (VIII)

mit cyclischem Silazan der vorstehenden allgemeinen Formel II hergestellt wird, wobei
- **u**: die Werte 0 oder 1,
- **v**: die Werte 1 - u und
- **n**: eine Zahl von 1 bis 20000 bedeuten.

Vorzugsweise hat u den Wert 0.
**n** weist vorzugsweise Werte von 1 bis 20000, insbesondere 8 bis 2000 auf.
Wenn ein Gemisch von Ausgangsverbindungen der allgemeinen Formel VIII eingesetzt wird, bezeichnet der Wert von n den Durchschnitt der Polymerisationsgrade der vorhandenen Silanole der allgemeinen Formel VIII.

Die so dargestellten linearen Organosiloxane der allgemeinen Formel VII können im wesentlichen durch 3 verschiedene Größen charakterisiert werden:
- Viskosität (bzw. Molekulargewicht)
- Amingehalt
- Grad der Aminofunktionalität der Endgruppen

Von diesen Größen können jedoch bei linearem Organosiloxan der allgemeinen Formel VII nur zwei unabhängig voneinander variiert werden, d. h. bei festgelegter Viskosität und Funktionalität ist der Amingehalt festgelegt. Bei festgelegtem Amingehalt und Viskosität ist die Funktionalität festgelegt und bei festgelegtem Amingehalt und Funktionalität ist die Viskosität festgelegt.

Will man nun lineares Organosiloxan der allgemeinen Formel VII herstellen, bei denen der Grad der Funktionalisierung keine Rolle spielt, d.h daß im Falle der Siliconöle diese keine Funktionalität von 2 aufweisen müssen, sondern nur durch den Gesamt-Amingehalt und ihre Viskosität beschrieben werden, so wird als Siliconkomponente ein geeignetes Organosiloxan der allgemeinen folgenden Formel VIII gewählt, welche dem Endprodukt die gewünschte Viskosität verleiht, und zur Funktionalisierung ein cyclisches Silazan der allgemeinen Formel V eingesetzt, und zwar in der Menge, die dem Amingehalt des endgültigen Produktes entsprechen soll.

Die Verbindungen der allgemeinen Formel VII haben weiterhin den Vorteil, daß man sie, wenn **u** > 0 ist, entweder mit sich selbst oder mit Verbindungen der allgemeinen Formel VIII kondensieren kann, gegebenenfalls mit Unterstützung eines Katalysators, um ebenfalls Verbindungen der allgemeinen Formel VII herzustellen, welche jedoch ein höheres Molekulargewicht besitzen, d.h der Zahlenwert der Zahl **n** steigt an. In einem besonders bevorzugten Fall steht **n** für eine Zahl von 15 bis 50 vor der Kondensation und 50 bis 2000 nach der Kondensation.

Bei dem Verfahren zur Herstellung von aminofunktionellem Organosiloxan der allgemeinen Formel V ist die Menge der verwendeten Silazane der allgemeinen Formel III abhängig von der Menge der zu funktionalisierenden Silanol-Gruppen. Will man jedoch eine vollständige Funktionalisierung der OH-Gruppen erreichen, so ist das Silazan in mindestens äquimolaren Mengen zuzugeben. Verwendet man das cyclische Silazan im Überschuß, so kann das nicht abreagierte Silazan im Anschluß entweder abdestilliert werden oder hydrolysiert und dann, gegebenenfalls, abgezogen werden.

Bevorzugt wird die Herstellung von aminofunktionellem Organosiloxan der allgemeinen Formel V bei 0°C bis 100°C, besonders bevorzugt bei mindestens 10°C bis mindestens 40 C durchgeführt.
Das Verfahren kann dabei sowohl unter Einbeziehung von Lösungsmitteln durchgeführt werden, oder aber auch ohne die Verwendung von Lösungsmitteln in geeigneten Reaktoren. Dabei wird gegebenenfalls unter Vakuum oder unter Überdruck oder bei Normaldruck (0,1 MPa) gearbeitet.

Bei der Verwendung von Lösungsmitteln sind inerte, insbesondere aprotische Lösungsmittel wie aliphatische Kohlenwasserstoffe, wie z. B. Heptan oder Decan und aromatische Kohlenwaserstoffe wie z. B. Toluol oder Xylol bevorzugt. Ebenfalls können Ether wie THF, Diethylether oder MTBE verwendet werden. Die Menge des Lösungsmittels sollte ausreichen, um eine ausreichende Homogenisierung der Reaktionsmischung zu gewährleisten. Lösungsmittel oder Lösungsmittelgemische mit einem Siedepunkt bzw. Siedebereich von bis zu 120° C bei 0,1 MPa sind bevorzugt.

Falls Silazan der allgemeinen Formel III zu dem Organosiloxan der allgemeinen Formel VI im Unterschuss zugegeben wird, können restliche nicht umgesetzte Si-OH Gruppen im aminofunktionellen Organosiloxan der allgemeinen Formel V verbleiben oder werden mit anderen Silazanen der nachstehenden allgemeinen Formel IX umgesetzt:

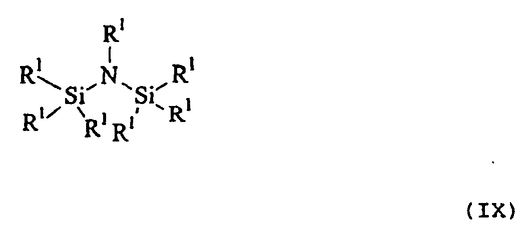

Man erhält so aminofunktionelles Organosiloxan der allgemeinen Formel X

(SiO_{4/2})ₖ(R¹SiO_{3/2})ₘ(R¹₂SiO_{2/2})ₚ(R¹₃SiO_{1/2})_{q}

[O_{1/2}SiR¹₂-R-NH₂]ₛ[O_{1/2}H]ₜ(O_{1/2}SiR¹₃)_{w} (X)

Dabei sind **R, R¹, k, m, p, q und s** wie oben definiert. **t** ist größer oder gleich 0, **w** ist größer 0 und **s + t + w = r,** wobei **r** wie in der vorstehenden allgemeinen Formel VI definiert ist.

Silazane der allgemeinen Formel IX können gleichzeitig mit cyclischem Silazan der allgemeinen Formel II oder nach der Umsetzung des Silazans der allgemeinen Formel II eingesetzt werden.

Werden lineare Organosiloxane der vorstehenden allgemeinen Formel VIII mit sowohl Silazanen der allgemeinen Formel II als auch Silazanen der allgemeinen Formel IX umgesetzt, so erhält man Verbindungen der allgemeinen Formel XI

[R¹₃Si]ᵤ[H₂N-R-SiR¹₂]ᵥO(SiR¹₂O)ₙSiR¹₂-R-NH₂ (XI)

wobei **R¹, R,** und **n** wie oben definiert sind und durchschnittlich **u** > 0, **v** < 1 und **u + v** = 1.

Vorzugsweise wird eine Kieselsäure (FM) hergestellt mit homogen modifizierter Oberfläche, mit einer mittleren Primärteilchen-Partikelgröße kleiner als 100 nm, bevorzugt mit einer mittleren Primärteilchen-Partikelgröße von 5 bis 50 nm, wobei diese Primärteilchen nicht isoliert in der Kieselsäure existieren, sondern Bestandteile größerer Aggregate (Definition nach DIN 53206) sind, die einen Durchmessern von 50 bis 1000 nm aufweisen und Agglomerate (Definition nach DIN 53206) aufbauen, die in Abhängigkeit von der äußeren Scherbelastung Größen von 1 bis 500 µm aufweisen, wobei die Kieselsäure eine spezifischen Oberfläche von 10 bis 300 m²/g (gemessen nach der BET Methode nach DIN 66131 und 66132) aufweist, wobei die Kieselsäure eine fraktale Dimension der Masse Dₘ von kleiner oder gleich als 2,8, bevorzugt kleiner oder gleich 2,7, besonders bevorzugt von 2,4 bis 2,6, und eine Dichte an Oberflächen-Silanolgruppen SiOH von kleiner als 0,4 SiOH/nm², bevorzugt von kleiner als 0,25 SiOH/nm², besonders bevorzugt von kleiner als 0,15 SiOH/nm² und pro 100 m²/g spezifischer Oberfläche (gemessen nach der BET Methode nach DIN 66131 und 66132) einen Kohlenstoffgehalt von mindestens 1,0 Gew.-%, bevorzugt größer 1,5 Gew.-%aufweist.

Das oberflächenmodifizierte Metalloxid (FM) ist im weiteren dadurch gekennzeichnet, dass es in polaren Systemen, wie lösemittelfreien Polymeren und Harzen, oder wie Lösungen, Suspensionen, Emulsionen und Dispersionen von organischen Harzen in wässrigen Systemen oder organischen Lösemitteln (z.B.: Polyester, Vinylester, Epoxid, Polyurethan, Alkydharze, u.a.). eine hohe Verdickungswirkung aufweist, und damit als rheologisches Additiv in diesen Systemen geeignet ist.

Das oberflächenmodifizierte Metalloxid (FM) ist im weiteren dadurch gekennzeichnet, dass es in unpolaren Systemen, wie unvernetztem Siliconkautschuk, eine geringe Verdickungswirkung aufweist, dabei zugleich aber eine hohe Verstärkungswirkung in den vernetzten Siliconkautschuken zeigt, und damit als Verstärkerfüllstoff für Siliconkautschuke hervorragend geeignet ist.

Das oberflächenmodifizierte Metalloxid (FM) ist im weiteren dadurch gekennzeichnet, dass es in pulverförmigen Systemen Verbackungen oder Verklumpungen, z.B. unter Feuchteeinfluß verhindert, aber auch nicht zur Reagglomeration neigt, und damit zur unerwünschten Separierung, sondern Pulver fließfähig erhält und somit belastungsstabile und lagerstabile Mischungen ermöglicht. Dies gilt im besonderen für den Einsatz in nichtmagnetischen und magnetischen Tonern und Entwicklern und Ladungssteuerungshilfsmitteln, z.B. in kontaktlosen oder elektrofotografischen Druck-/Reproduktionsverfahren die 1- und 2-Komponenten Systeme sein können. Dies gilt auch in pulverförmigen Harzen, die als Anstrichsysteme verwendet werden.

Das Metalloxid (FM) in kann eingesetzt werden Systemen von niedriger bis hoher Polarität als viskositätsgebende Komponente. Dies betrifft alle lösemittelfreie, lösemittelhaltigen, wasserverdünnbare, filmbildende Anstrichmittel, gummiartige bis harte Beschichtungen, Klebstoffe, Versiegelungs- und Vergußmassen sowie andere vergleichbare Systeme.

Metalloxid (FM) kann eingesetzt werden in Systemen wie:
- Epoxidsysteme
- Polyurethansysteme (PUR)
- Vinylesterharze
- Ungesättigte Polyesterharze
- Wasserlösliche und wasserdispergierbare Harzsysteme
- Lösemittelarme Harzsysteme, sogenannte "high solids".
- Lösemittelfreie Harze, die in Pulverform z.B. als Beschichtungsstoffe appliziert werden.

Das Metalloxid (FM) liefert als rheologisches Additiv in diesen Systemen die erforderte notwendige Viskosität, Strukturviskosität, Thixotropie und eine für das Standvermögen an senkrechten Flächen ausreichende Fließgrenze.

Das Metalloxid (FM) kann speziell eingesetzt werden als rheologisches Additiv und Verstärkerfüllstoff in unvernetzten und vernetzten Siliconsystemen, wie Siliconelastomere, die aus Siliconpolymeren, wie Polydimethylsiloxanen, Füllstoffen, und weiteren Additiven zusammengesetzt sind, bestehen. Diese können z.B. mit Peroxiden vernetzt werden, oder über Additions-Reaktionen, die sogenannte Hydrosilylierungsreaktion, zwischen olefinischen Gruppen und Si-H Gruppen vernetzt werden, oder über Kondensationsreaktionen zwischen Silanolgruppen, z.B. solche, die unter Wassereinwirkung entstehen.

Toner, Entwickler und Ladungssteuerungshilfsmittel können das oberflächenmodifizierte Metalloxid (FM) enthalten. Derartige Entwickler und Toner sind z.B. magnetische 1-Komponenten und 2-Komponenten Toner, aber auch nichtmagnetische Toner. Diese Toner können aus Harzen, wie Styrol- und Acrylharze bestehen, und bevorzugt zu Partikelverteilungen von 1-100 µm vermahlen sein, oder können Harze sein, die in Polymerisationsverfahren in Dispersion oder Emulsion oder Lösung oder in Masse zu Partikelverteilungen von bevorzugt 1 - 100 µm hergestellt wurden. Metalloxid (FM) wird bevorzugt eingesetzt zur Verbesserung und Steuerung des Pulver-Fließverhaltens, und / oder zur Regulierung und Steuerung der triboelektrischen Ladungseigenschaften des Toners oder Entwicklers. Derartige Toner und Entwicklern können eingesetzt werden bevorzugt bei elektrophotografischen Print- und Druckverfahren, auch sind sie einsetzbar bei direkten Bildübertragungsverfahren.

Ein Toner hat typischerweise folgende Zusammensetzung:
- Fest-Harz als Binder, das ausreichend hart ist, um ein Pulver hieraus herzustellen, bevorzugt mit einem Molekulargewicht über 10000, bevorzugt mit einem Anteil an Polymeren von einem Molekulargewicht unter 10000 von weniger als 10%, z.B. ein Polyesterharz, das ein Co-Kondensat aus Diol und Carbonsäure, -ester, oder -anhydrid sein kann, z.B. mit einer Säurezahl von 1-1000, bevorzugt 5-200, oder ein Polyacrylat oder ein Polystyrol, oder Mischungen, oder Co-Polymerisate hieraus sein kann, und mit einem mittleren Partikeldurchmesser kleiner 20 µm, bevorzugt kleiner 15 µm, besonders bevorzugt kleiner 10 µm. Das Tonerharz kann Alkohole, Carbonsäuren und Polycarbonsäure enthalten.
- Technisch übliche Farbstoffe, wie schwarzer Ruß, Farb-Ruß, Cyan-Farbstoffe, Magenta-Farbstoffe, Gelbe Farbstoffe.
- Typischerweise positive Ladungssteuerungsmittel: Ladungssteuernde Additive z.B. vom Typ Nigrosin-Farbstoff, oder Triphenylmethan Farbstoffe substituiert mit tertiären Aminen, oder quaternäre Ammoniumsalze wie CTAB (cetyltrimethylammonium bromide = hexadecyltrimethylammonium bromide), oder Polyamine, typischerweise kleiner 5 Gew.%.
- Wahlweise negative Ladungssteuerungsmittel: Ladungssteuernde Additive wie Metall-haltige Azo-Farbstoffe, oder KupferPhthalocyanin Farbstoffe, oder Metall-Komplexe zum Beispiel von alkylierten Salicylsäure-Derivaten oder Benzoesäure, insbesondere mit Bor oder Aluminium, in den erforderlichen Mengen, typischerweise kleiner 5 Gew.%.
- Gegebenenfalls können, zur Herstellung magnetischer Toner, magnetische Pulver zugesetzt werden, wie z.B. Pulver die in einem magnetischen Feld magnetisiert werden können, wie ferromagnetische Substanzen, wie Eisen, Kobalt, Nickel, Legierungen, oder Verbindungen wie Magnetit, Haematit oder Ferrit.
- Wahlweise können auch Entwickler zugesetzt werden, wie Eisenpulver, Glaspulver, Nickelpulver, Ferritpulver.
- Metalloxid (FM) in Gehalten, bezogen auf ein Fest-Harz als Binder mit 20 µm mittlerem Partikeldurchmesser, von größer 0,01 Gew.%, bevorzugt größer 0,1 Gew.%. Mit abnehmendem mittlerem Partikeldurchmesser des Binders werden i.a. höhere Gehalte an Metalloxid erforderlich, wobei die notwendige Menge an Metalloxid umgekehrt proportional zum Partikeldurchmesser des Binders zunimmt. Der Gehalt an Metalloxid ist vorzugsweise jedoch in jedem Fall kleiner 5 Gew.% bezogen auf Binder Harz.
- Weitere anorganische Zusätze, wie feinteilige und grobteilige Siliciumdioxide, darunter auch solche mit 100 bis 1000 nm mittlere Durchmesser, Aluminiumoxide, wie pyrogene Aluminiumoxide, Titandioxide, wie pyrogene oder Anatas oder Rutile, Zirconoxide.
- Wachse, wie paraffinische Wachse mit 10-500 C-Atomen, Siliconwachse, olefinische Wachse, Wachse mit einer Jodzahl < 50, bevorzugt < 25, und einer Verseifungszahl von 10-1000, bevorzugt 25-300.

Der Toner kann in verschiedenen Entwicklungsverfahren eingesetzt werden, wie zur elektrophotografischen Bilderzeugung und Reproduktion, wie z.B. magnetische Bürsten-Verfahren, Kaskaden Verfahren, Einsatz von leitfähigen und nicht leitfähigen magnetischen Systemen, Pulverwolkenverfahren, Entwicklung in Abdruck, und andere.

Durch den Einsatz des cyclischen Silazans ergeben sich insbesondere folgende Vorteile:
- hohe Reaktionsausbeuten - damit wirtschaftlich und Ressourcen schonend
- Hoher Silyliergrad bei minimalem Einsatz von Silyliermittel
- Silylierung unter Verzicht auf Katalysatoren, die oft aus verfahrenstechnischen Gründen im Produkt verbleiben müssen, die die Produktqualität und -performance des Endprodukts negativ beeinflussen könnten.
- Verbesserte Bildqualität bei Einsatz des mit der Metalloxid (FM) hergestellten Toners
- Verlängerte Lebensdauer bei hoher Performance (z.B. Bildpunktdichte) des mit der Metalloxid (FM) hergestellten Toners.

Alle vorstehenden Symbole der vorstehenden Formeln weisen ihre Bedeutungen jeweils unabhängig voneinander auf.

Soweit nicht anders angegeben sind in den folgenden Beispielen alle Mengen- und Prozentangaben auf das Gewicht bezogen, alle Drücke 0,10 MPa (abs.) und alle Temperaturen 20°C.

### Beispiele

### Beispiel 1

In einer kontinuierlichen Apparatur werden bei einer Temperatur von 30 °C unter Inertgas N₂ zu einem Massestrom von 1000 g/h an hydrophiler KIESELSÄURE, mit einer Feuchte < 1% und einem HCl Gehalt < 100 ppm und mit einer spezifischen Oberfläche von 130 m²/g (gemessen nach der BET Methode nach DIN 66131 und 66132) (erhältlich unter dem Namen WACKER HDK S13 bei Wacker-Chemie GmbH, München, D), 50 g/h VE-Wasser in feinstverteilter Form zugedüst, 22,5 g/h eines cyclischen Silazans der allgemeinen Formel II, in der **R¹** eine Gruppe -CH₃ und **R** eine Gruppe - CH₂-CH₂-CH₂- bedeuten, in flüssiger, feinstverteilter Form zugefügt durch Verdüsen über eine Einstoffdüse (Druck 10 bar) zugefügt. Die so beladene KIESELSÄURE wird bei einer Verweilzeit von 2 Stunden bei einer Temperatur von 30 °C weiter mittels Rühren fluidisiert, und anschließend in einem Reaktor bei 100 °C und 2 Stunde Verweilzeit zur Reaktion gebracht. Erhalten wird ein hydrophobes weißes KIESELSÄURE-Pulver mit homogener Silyliermittelschicht.
Die Analysedaten sind in Tabelle 1 aufgeführt.

### Beispiel 2

In einer kontinuierlichen Apparatur werden bei einer Temperatur von 30 °C unter Inertgas N₂ zu einem Massestrom von 1000 g/h an hydrophiler KIESELSÄURE, mit einer Feuchte < 1% und einem HCl Gehalt < 100 ppm und mit einer spezifischen Oberfläche von 130 m²/g (gemessen nach der BET Methode nach DIN 66131 und 66132) (erhältlich unter dem Namen WACKER HDK S13 bei Wacker-Chemie GmbH, München, D), 50 g/h VE-Wasser in feinstverteilter Form zugedüst, 45 g/h eines cyclischen Silazans der allgemeinen Formel II, in der **R¹** eine Gruppe -CH₃ und **R** eine Gruppe - CH₂-CH₂-CH₂- bedeuten, in flüssiger, feinstverteilter Form zugefügt durch Verdüsen über eine Einstoffdüse (Druck 10 bar) zugefügt. Die so beladene KIESELSÄURE wird bei einer Verweilzeit von 2 Stunden bei einer Temperatur von 30 °C weiter mittels Rühren fluidisiert, und anschließend in einem Reaktor bei 100 °C und 2 Stunde Verweilzeit zur Reaktion gebracht. Erhalten wird ein hydrophobes weißes KIESELSÄURE-Pulver mit homogener Silyliermittelschicht.
Die Analysedaten sind in Tabelle 1 aufgeführt.

### Beispiel 3

In einer kontinuierlichen Apparatur werden bei einer Temperatur von 30 °C unter Inertgas N₂ zu einem Massestrom von 1000 g/h an hydrophiler KIESELSÄURE, mit einer Feuchte < 1% und einem HCl Gehalt < 100 ppm und mit einer spezifischen Oberfläche von 130 m²/g (gemessen nach der BET Methode nach DIN 66131 und 66132) (erhältlich unter dem Namen WACKER HDK S13 bei Wacker-Chemie GmbH, München, D), 50 g/h VE-Wasser in feinstverteilter Form zugedüst, 135 g/h eines OH-endständigen Polydimethylsiloxans mit einer Viskosität bei 25 °C von 40 mPas und einem OH-Gehalt von 4 Gew.%, sowie 45 g/h eines cyclischen Silazans der allgemeinen Formel II, in der **R¹** eine Gruppe -CH₃ und **R** eine Gruppe -CH₂-CH₂-CH₂- bedeuten, in flüssiger, feinstverteilter Form zugefügt durch Verdüsen über eine Einstoffdüse (Druck 10 bar) zugefügt. Die so beladene KIESELSÄURE wird bei einer Verweilzeit von 2 Stunden bei einer Temperatur von 30 °C weiter mittels Rühren fluidisiert, und anschließend in einem Reaktor bei 100 °C und 2 Stunde Verweilzeit zur Reaktion gebracht. Erhalten wird ein hydrophobes weißes KIESELSÄURE-Pulver mit homogener Silyliermittelschicht.
Die Analysedaten sind in Tabelle 1 aufgeführt.

### Beispiel 4

Bei einer Temperatur von 30 °C unter Inertgas N₂ werden zu 100 g an hydrophiler KIESELSÄURE, mit einer Feuchte < 1% und einem HCl Gehalt < 100 ppm und mit einer spezifischen Oberfläche von 130 m²/g (gemessen nach der BET Methode nach DIN 66131 und 66132) (erhältlich unter dem Namen WACKER HDK S13 bei Wacker-Chemie GmbH, München, D), 5 g/h VE-Wasser in feinstverteilter Form zugedüst und sowie durch Verdüsen über eine Einstoffdüse (Druck 5 bar), 2,25 g eines cyclischen Silazans der allgemeinen Formel II, in der **R¹** eine Gruppe -CH₃ und **R** eine Gruppe -CH₂-CH₂-CH₂- bedeuten, zugefügt. Die so beladene KIESELSÄURE wird bei einer Verweilzeit von 2,5 Stunden bei einer Temperatur von 30 °C weiter mittels Rühren fluidisiert, und anschließend bei 100 °C in einem 100 l Trockenschrank unter N₂ zur Reaktion gebracht.
Die Analysedaten sind in Tabelle 1 aufgeführt.

**Tabelle 1**

| **Analysedaten der KIESELSÄURE der Beispiele 1 bis 4** | | | |
|---|---|---|---|
| Beispiel | %C | BET | pH |
| 1 | 1,2 | 106 | 10,1 |
| 2 | 2,1 | 98 | 10,3 |
| 3 | 4,9 | 81 | 9,9 |
| 4 | 5,0 | 79 | 10,0 |

### Beschreibung der Analysenmethoden

1. Kohlenstoffgehalt (%C)
   Elementaranalyse auf Kohlenstoff; Verbrennen der Probe bei >1000°C im O₂-Strom, Detektion und Quantifizierung des entstehenden CO₂ mit IR; Gerät LECO 244
2. BET
   gemessen nach der BET Methode nach DIN 66131 und 66132
3. pH
   4%ig (Gew%) Suspension der Kieselsäure in gesättigter wässrige Kochsalzlösung : Methanol = 50 : 50

### Beispiel 5

### Ladungsverhalten der KIESELSÄURE

Je 50 g eines Ferrit Carriers mit einem mittleren Partikeldurchmesser von 80 µm werden mit je 0,5 g der KIESELSÄURE'en aus den Beispielen 3 und 4 bei RT durch Schütteln in einem 100 ml PE-Gefäß während 15 Min vermischt. Vor der Messung werden diese Mischungen während 5 Minuten bei 64 UpM in einem geschlossenen 100 ml PE-Gefäß auf einem Rollenbock aktiviert. Mit einer "hard-blow-off cell" ( ca. 3 g KIESELSÄURE, Kapazität 10 nF, 45 µm Sieb, Luftstrom 1 l/Min, Luftdruck 2,4 kPa, Meßzeit 90 sec ) ( EPPING GmbH, D-85375 Neufahrn ) wird das triboelektrische Aufladungsverhalten der KIESELSÄURE gemessen als Verhältnis von KIESELSÄURE-Ladung pro KIESELSÄURE-Masse (q/m).

**Tabelle 2**

| Beispiel | Ladungsverhalten q/m gegen Ferrit [µC/g] |
|---|---|
| Carrier + Beispiel 1 | + 80 |
| Carrier + Beispiel 2 | + 250 |
| Carrier + Beispiel 3 | +100 |
| Carrier + Beispiel 4 | + 110 |

### Beispiel 6

### Fließ- und Ladungsverhalten von KIESELSÄURE-enthaltendem Toner

100 g eines KIESELSÄURE-freien magnetischen 1-Komponenten Trockentoners, Typ negativ ladend, "crushed type", Basis Copolymer Styrol/Methacrylat, mit einer mittleren Partikelgröße von 14 µm werden mit 0,4 g einer KIESELSÄURE nach Beispielen 3-4 in einem Taumelmischer ( z.B. Turbular ) während 1 Stunde bei RT gemischt. Nach einer Belastungszeit des Toners von 20 Min ( entsprechend der Belastung nach 1000 Kopiervorgängen ) wird die Aufladung ( Ladung pro Masse ) des fertigen KIESELSÄURE-haltigen Toners und das Fließverhalten ( Massenfluß ) des fertigen KIESELSÄURE-haltigen Toners zur Entwicklungswalze in einem "q/m-Mono" Elektrometer/Flowtester ( EPPING GmbH, D-85375 Neufahrn ) bestimmt.

**Tabelle 3**

| Beispiel | Tonerladung [µC/g] | Fließverhalten [mg] |
|---|---|---|
| KIESELSÄURE-freier Toner | + 0, 50 | 2 |
| Toner + Beispiel 1 | + 2,3 | 36 |
| Toner + Beispiel 2 | + 2,8 | 45 |
| Toner + Beispiel 3 | + 3,0 | 48 |
| Toner + Beispiel 4 | + 2,8 | 47 |

## Patentansprüche

1. Verfahren zur Herstellung eines mit Gruppen der allgemeinen Formel I
SiR¹₂-R-NH₂ (I),
oberflächenmodifizierten Feststoffs (FM), bei dem ein Feststoff (F), der an der Oberfläche OH-Gruppen aufweist, mit cyclischem Silazan der allgemeinen Formel II 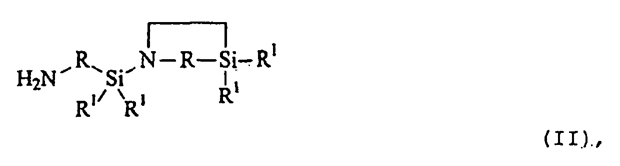 umgesetzt wird, wobei
**R** einen divalenten N-C und C-Si gebundenen, gegebenenfalls Cyano- oder halogensubstituierten C₃-C₁₅-Kohlenwasserstoff-Rest, in dem eine oder mehrere, einander nicht benachbarte Methylen-einheiten durch Gruppen -O-, -CO-, -COO-, -OCO-, oder -OCOO-, -S-, oder **-NR^{x}-** ersetzt sein können und in dem eine oder mehrere, einander nicht benachbarte Methineinheiten durch Gruppen, -N=,-N=N-,oder -P= ersetzt sein können, wobei zwischen Silicium-Atom und Stickstoffatom des Ringes mindestens 3 und maximal 6 Atome angeordnet sind,
**R^{x}** Wasserstoff oder einen gegebenenfalls mit -CN oder Halogen substituierten C₁-C₁₀-Kohlenwasserstoffrest und
**R¹** ein Wasserstoffatom oder einen monovalenten gegebenenfalls mit -CN, -NCO, -NR**^{x}**₂, -COOH, -COOR**^{x}**, -Halogen, -Acryl, -Epoxy, -SH, -OH oder -CONR**^{x}**₂ substituierten Si-C gebundenen C₁-C₂₀-Kohlenwasserstoffrest oder C₁-C₁₅-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -NR**^{x}**- ersetzt sein können und in denen eine oder mehrere, einander nicht benachbarte Methineinheiten durch Gruppen, -N=,-N=N-,oder -P= ersetzt sein können,
bedeuten.

2. Verfahren zur Herstellung eines oberflächenmodifizierten Feststoffs (FM), bei dem ein Feststoff (F), der an der Oberfläche OH-Gruppen aufweist, mit aminofunktionellem Organosiloxan der allgemeinen Formel V umgesetzt wird,
(SiO_{4/2})ₖ(R¹SiO_{3/2})ₘ(R¹₂SiO_{2/2})ₚ(R¹₃SiO_{1/2})_{q}
[O_{1/2}SiR¹₂-R-NH₂]ₛ[O_{1/2}H]ₜ (V)
welches erhältlich ist durch Umsetzung von Organosiloxan der allgemeinen Formel VI
(SiO_{4/2})ₖ(R¹SiO_{3/2})ₘ(R¹₂SiO_{2/2})ₚ(R¹₃SiO_{1/2})_{q}[O_{1/2}H]ᵣ (VI)
mit cyclischem Silazan der vorstehenden allgemeinen Formel II, wobei
**R** und **R¹** die bei der allgemeinen Formel II in Anspruch 1 bezeichneten Bedeutungen aufweisen und
**s** Werte von mindestens 1,
**r** Werte von mindestens 1,
**s + t** den Wert von r und
**k + m + p + q** Werte von mindestens 2 bedeuten.

3. Verfahren nach Anspruch 1 oder 2, bei dem **R** ein unverzweigter C₃-C₆-Alkylenrest ist.

4. Verfahren nach Anspruch 1 bis 3, bei dem **R¹** Methyl, Ethyl, Phenyl oder Vinyl bedeutet.

5. Verfahren nach Anspruch 1 bis 4, bei dem als Feststoffe (F) Metalloxide mit einer spezifischen Oberfläche von 0,1 bis 1000 m²/g eingesetzt werden.

6. Verfahren nach Anspruch 1 bis 5, bei dem als Feststoff (F) pyrogene Kieselsäure eingesetzt wird.

## Claims

1. Process for preparing a solid (FM) surface-modified with groups of the general formula I
SiR¹₂-R-NH₂ (I),
wherein a solid (F) having OH groups on the surface is reacted with cyclic silazane of the general formula II 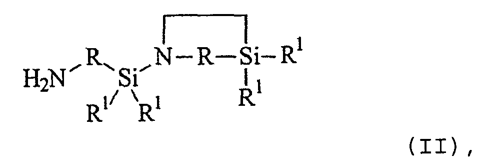 where
**R** denotes a divalent, optionally cyano- or halogen-substituted C₃-C₁₅ hydrocarbon radical which is bonded via N-C and C-Si and in which one or more non-adjacent methylene units may be replaced by groups -O-, -CO-, -COO-, -OCO-, or -OCOO-, -S-, or -NR^{x}- and in which one or more non-adjacent methine units may be replaced by groups -N=, -N=N-, or -P=, there being at least 3 and not more than 6 atoms between silicon atom and nitrogen atom in the ring,
**R^{x}** denotes hydrogen or a C₁-C₁₀ hydrocarbon radical which is optionally substituted by -CN or halogen, and
**R¹** denotes a hydrogen atom or a monovalent C₁-C₂₀ hydrocarbon radical or C₁-C₁₅ hydrocarbonoxy radical which is optionally substituted by -CN, -NCO, -NR^{x}₂, -COOH, -COOR^{x}, -halogen, -acryloyl, -epoxy, -SH, -OH or -CONR^{x}₂ and bonded via Si-C, and in each of which one or more non- adjacent methylene units may be replaced by groups -O-, -CO-, -COO-, -OCO-, or -OCOO-, -S-, or -NR^{x}- and in which one or more non-adjacent methine units may be replaced by groups -N=, - N=N-, or -P=.

2. Process for preparing a surface-modified solid (FM), wherein a solid (F) having OH groups on the surface is reacted with amino-functional organosiloxane of the general formula V
(SiO_{4/2})ₖ(R¹SiO_{3/2})ₘ(R¹₂SiO_{2/2})ₚ(R¹₃SiO_{1/2})_{q}
[O_{1/2}SiR¹₂-R-NH₂]ₛ[O_{1/2}H]ₜ (V)
which is obtainable by reacting organosiloxane of the general formula VI
(SiO_{4/2})ₖ(R¹SiO_{3/2})ₘ(R¹₂SiO_{2/2})ₚ(R¹₃SiO_{1/2})_{q}[O_{1/2}H]ᵣ (VI)
with cyclic silazane of the above general formula II, where
**R** and **R¹** are as defined for the general formula II in claim 1 and
**s** denotes values of at least 1,
**r** denotes values of at least 1,
**s** + **t** denote the value of r, and
**k + m + p + q** denote values of at least 2.

3. Process according to Claim 1 or 2, wherein R is an unbranched C₃-C₆ alkylene radical.

4. Process according to any of Claims 1 to 3, wherein R¹ denotes methyl, ethyl, phenyl or vinyl.

5. Process according to any of Claims 1 to 4, wherein said solid (F) comprises metal oxides having a specific surface area of from 0.1 to 1000 m²/g.

6. Process according to any of Claims 1 to 5, wherein said solid (F) comprises pyrogenic silica.

## Revendications

1. Procédé de préparation d'une substance solide à surface modifiée (FM) présentant des groupes de formule générale I,
SiR¹₂-R-NH₂ (I),
dans laquelle une substance solide (F) qui présente des groupes OH à la surface est transformée avec un silazane cyclique de formule générale II, 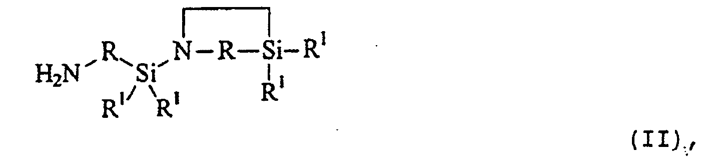 formules dans lesquelles
R signifie un radical hydrocarboné en C₃-C₁₅ divalent, lié par N-C et C-Si, le cas échéant substitué par cyano ou halogène, dans lequel une ou plusieurs unités méthylène non voisines les unes des autres peu(ven)t avoir été remplacée(s) par des groupes -O-, -CO-, -COO-, -OCO-, ou -OCOO-, -S-, ou -NR^{x}- et dans lequel une ou plusieurs unités méthine non voisines les unes des autres peu(ven)t avoir été remplacée(s) par des groupes -N=,-N=N-, ou -P=, au moins 3 atomes et au maximum 6 atomes étant disposés entre l'atome de silicium et l'atome d'azote du cycle,
R^{x} signifie un hydrogène ou un radical hydrocarboné en C₁-C₁₀ substitué le cas échéant par -CN ou halogène et
R¹ signifie un atome d'hydrogène ou un radical hydrocarboné en C₁-C₂₀ ou un radical oxy hydrocarboné en C₁-C₁₅, monovalent, le cas échéant substitué par -CN,-NCO, -NR^{x}₂, -COOH, -COOR^{x}, -halogène, -acryle, -époxy,-SH, -OH ou -CONR^{x}₂, lié par Si-C, dans lesquels une ou plusieurs unités méthylène non voisines les unes des autres peu(ven)t à chaque fois avoir été remplacée(s) par des groupes -O-, -CO-, -COO-, -OCO-, ou -OCOO-, -S-, ou -NR^{x}- et dans lesquels une ou plusieurs unités méthine non voisines les unes des autres peu(ven)t avoir été remplacée(s) par des groupes -N=, -N=N-, ou-P=.

2. Procédé de préparation d'une substance solide à surface modifiée (FM), dans lequel une substance solide (F) qui présente à la surface des groupes OH, est transformée avec un organosiloxane à fonctionnalité amino de formule générale V,
(SiO_{4/2})ₖ(R¹SiO_{3/2})ₘ(R¹₂SiO_{2/2})ₚ(R¹₃SiO_{1/2})_{q}
[O_{1/2}SiR¹₂-R-NH₂]ₛ[O_{1/2}H]ₜ (V)
lequel peut être obtenu par la transformation d'un organosiloxane de formule générale VI
(SiO_{4/2})k(R¹SiO_{3/2})ₘ(R¹₂SiO_{2/2})ₚ(R¹₃SiO_{1/2})_{q}[O_{1/2}H]ᵣ (VI)
avec un silazane cyclique de la formule générale précitée II,
R et R¹ présentant les significations indiquées à la formule générale II dans la revendication 1 et
s signifiant des valeurs d'au moins 1,
r signifiant des valeurs d'au moins 1,
s+t signifiant la valeur de r et
k+m+p+q signifiant des valeurs d'au moins deux.

3. Procédé selon la revendication 1 ou 2, dans lequel R est un radical alkylène en C₃-C₆ non ramifié.

4. Procédé selon la revendication 1 à 3, dans lequel R¹ signifie méthyle, éthyle, phényle ou vinyle.

5. Procédé selon la revendication 1 à 4, dans lequel des oxydes métalliques présentant une surface spécifique de 0,1 à 1000 m²/g sont utilisés comme substances solides (F).

6. Procédé selon la revendication 1 à 5, dans lequel de la silice pyrogénée est utilisée comme substance solide (F).
